(19) **Europäisches Patentamt**
**European Patent Office**
**Office européen des brevets**

(11) **EP 2 980 941 B1**

(12) **FASCICULE DE BREVET EUROPEEN**

(45) Date de publication et mention
de la délivrance du brevet:
**01.02.2017   Bulletin 2017/05**

(51) Int Cl.:
*H02H 3/02* *(2006.01)*       *H02H 7/12* *(2006.01)*
*H02M 1/32* *(2007.01)*       *H02M 5/10* *(2006.01)*
*H01F 38/00* *(2006.01)*      *H02J 3/34* *(2006.01)*
*H02H 7/122* *(2006.01)*      *H02H 7/125* *(2006.01)*
*H02M 5/12* *(2006.01)*

(21) Numéro de dépôt: **15179314.8**

(22) Date de dépôt: **31.07.2015**

(54) **DISPOSITIF D'ADAPTATION D'UN SIGNAL D'ALIMENTATION ÉLECTRIQUE, SYSTÈME D'ALIMENTATION ÉLECTRIQUE ET PROCÉDÉ D'ADAPTATION D'UN SIGNAL D'ALIMENTATION ÉLECTRIQUE ASSOCIÉS**

VORRICHTUNG ZUM ANPASSEN EINES ELEKTRISCHEN STROMVERSORGUNGSSIGNALS, ENTSPRECHENDES STROMVERSORGUNGSSYSTEM UND VERFAHREN ZUR ANPASSUNG DES STROMVERSORGUNGSSIGNALS

DEVICE FOR ADAPTING A POWER SUPPLY SIGNAL, ASSOCIATED POWER SUPPLY SYSTEM AND METHOD FOR ADAPTING A POWER SUPPLY SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **01.08.2014   FR 1457522**

(43) Date de publication de la demande:
**03.02.2016   Bulletin 2016/05**

(73) Titulaire: **Schneider Electric Industries SAS**
**92500 Rueil-Malmaison (FR)**

(72) Inventeurs:
• **ION, Maricica - Mirela**
**38050 GRENOBLE Cedex 09 (FR)**
• **MEGDICHE, Malik**
**38050 GRENOBLE Cedex 09 (FR)**
• **RADU, Daniel**
**38050 GRENOBLE Cedex 09 (FR)**
• **CHAMBON, Patrick**
**38050 GRENOBLE Cedex 09 (FR)**
• **BACHA, Seddik**
**38050 GRENOBLE Cedex 09 (FR)**

(74) Mandataire: **Lavoix**
**2, place d'Estienne d'Orves**
**75441 Paris Cedex 09 (FR)**

(56) Documents cités:
**EP-A1- 0 828 265     WO-A2-2010/066888**
**US-B1- 7 362 206**

**Description**

La présente invention concerne un dispositif d'adaptation d'un signal d'alimentation électrique reçu d'un convertisseur électrique et apte à être délivré à une charge. La présente invention concerne également un système d'alimentation électrique d'une charge, comprenant au moins un convertisseur électrique et un tel dispositif d'adaptation, ainsi qu'un procédé d'adaptation d'un signal d'alimentation électrique reçu du convertisseur électrique et apte à être délivré à la charge.

Dans le domaine de l'adaptation de l'alimentation électrique délivrée par un convertisseur électrique à une charge, il est connu d'utiliser un dispositif d'adaptation d'un signal d'alimentation électrique tel que décrit dans le document WO 2010/066888 A2. Le dispositif d'adaptation comprend un transformateur électrique comportant une borne de sortie reliée électriquement à la charge et une borne d'entrée reliée électriquement au convertisseur électrique, et est adapté pour modifier le niveau de tension délivré à la charge. Le convertisseur est généralement un convertisseur statique, c'est-à-dire formé à base de composants électriques semi-conducteurs, et comprend un interrupteur de puissance. L'interrupteur de puissance est configuré pour limiter le courant délivré par le convertisseur à un premier niveau de courant de court-circuit et couper l'alimentation de la charge par le convertisseur, lorsque le courant en sortie du convertisseur est supérieur ou égal à la valeur du premier niveau de courant pendant un temps prédéterminé. La charge est, par exemple, un réseau électrique d'un navire à quai à alimenter électriquement.

Dans une installation électrique comprenant un tel dispositif d'adaptation connecté entre un tel convertisseur électrique et une telle charge, le premier niveau de courant de court-circuit acceptable par le convertisseur avant que son interrupteur coupe l'alimentation électrique de la charge est inférieur à un deuxième niveau de courant de court-circuit nécessaire à des appareils de protection électrique, par exemple des relais de protection de disjoncteurs positionnés en aval du transformateur, pour assurer l'isolement du défaut. En effet, un navire est par exemple destiné à être alimenté électriquement via un groupe diesel lorsqu'il n'est pas à quai et des appareils de protection associés au réseau électrique du navire sont adaptés pour se déclencher lorsqu'ils mesurent un courant élevé de l'ordre de trois fois un courant nominal de fonctionnement, tandis que le convertisseur présenté ci-dessus est adapté pour couper l'alimentation électrique de la charge, et s'arrêter de fonctionner lorsque le courant en sortie du convertisseur est de l'ordre de un à deux fois le courant nominal.

Ainsi, lors de l'apparition d'un court-circuit au niveau de la charge, le convertisseur passe en limitation de courant et fourni la charge avec son courant de court-circuit maximal pendant une durée de l'ordre de une seconde et après il coupe, via son interrupteur de puissance, l'alimentation électrique de la charge et la charge n'est plus alimentée. La sélectivité des appareils de protection électrique, notamment des disjoncteurs associés au réseau électrique du navire, n'est alors plus assurée, de même que la continuité de l'alimentation électrique du navire.

Or, le fait de garantir la sélectivité des appareils de protection électrique permet d'avoir une installation électrique pour laquelle, en cas de court-circuit, le court-circuit est éliminé uniquement par l'appareil de protection placé immédiatement en amont du court-circuit par rapport au convertisseur.

Le but de l'invention est donc de proposer un dispositif d'adaptation d'un signal d'alimentation électrique, reçu d'un convertisseur électrique et apte à être délivré à une charge, permettant d'améliorer l'alimentation de la charge, notamment, d'assurer la continuité de l'alimentation de la charge et de garantir la sélectivité d'appareils de protection électrique associés à la charge.

A cet effet, l'invention concerne un dispositif d'adaptation selon la revendication 1.

Grâce à l'invention, lorsque l'organe de détection détecte un court-circuit, les moyens de pilotage sont aptes à modifier le rapport de transformation du transformateur et ainsi à modifier la valeur du courant circulant vers la charge. La modification du courant circulant vers la charge permet d'améliorer le fonctionnement de la charge et notamment le déclenchement d'appareils de protection associés à la charge en cas de court-circuit, pour avantageusement garantir la sélectivité des appareils de protection électrique associés à la charge et assurer la continuité de l'alimentation électrique de la charge.

Selon d'autres aspects avantageux de l'invention, le dispositif d'adaptation comprend en outre une ou plusieurs des caractéristiques optionnelles des revendications 2 à 11.

L'invention a également pour objet un système d'alimentation électrique selon la revendication 12.

L'invention a également pour objet un procédé d'adaptation d'un signal d'alimentation électrique selon la revendication 13.

Selon d'autres aspects avantageux de l'invention, le procédé d'adaptation comprend en outre une ou plusieurs des caractéristiques optionnelles des revendications 14 et 15.

L'invention sera mieux comprise et d'autres avantages de celle-ci apparaitront à la lumière de la description qui va suivre, donnée uniquement à titre d'exemple non limitatif, et faite en se référant aux dessins annexés, sur lesquels :

- la figure 1 est une représentation schématique d'une installation électrique comprenant une charge alimentée par un système d'alimentation électrique conforme à un premier mode de réalisation de l'invention ;

- la figure 2 est un organigramme d'un procédé d'adaptation d'un signal d'alimentation électrique délivré à la charge, par un convertisseur appartenant au système d'alimentation de la figure 1 ;
- la figure 3 est une représentation analogue à celle de la figure 1 dans laquelle le système d'alimentation électrique est conforme à un deuxième mode de réalisation de l'invention ; et
- la figure 4 est un organigramme d'un procédé d'adaptation du signal d'alimentation électrique délivré à la charge, par un convertisseur appartenant au système d'alimentation de la figure 3.

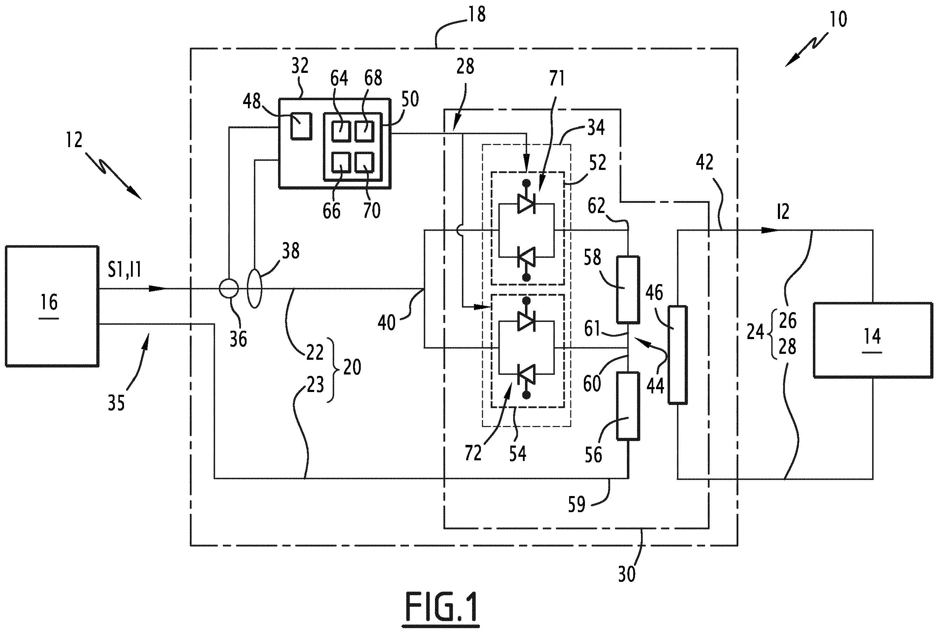

Une installation électrique 10 comprenant un système d'alimentation électrique 12, conforme à un premier mode de réalisation de l'invention, et une charge électrique 14 est représentée sur la figure 1.

Le système d'alimentation électrique 12 comporte un convertisseur électrique 16 et un dispositif 18 d'adaptation d'un signal d'alimentation électrique S1 apte à être reçu du convertisseur électrique 16 et à être délivré à la charge 14.

La charge électrique 14 comprend, par exemple, une pluralité d'équipements électriques et d'appareils électriques de protection, tels que des disjoncteurs, non représentés. La charge 14 correspond, par exemple, au réseau électrique d'un navire à quai comprenant un moteur, c'est-à-dire, par exemple, un groupe diesel, le système d'alimentation électrique 12 étant alors disposé sur le quai.

La charge 14 est donc, par exemple, un premier réseau électrique fonctionnant à une fréquence de 60 Hz et en moyenne tension, c'est-à-dire entre 1 kV et 50 kV. Les appareils de protection sont positionnés en différents points du premier réseau et sont chacun destinés à assurer la protection électrique de différentes parties du premier réseau. Les appareils de protection sont ainsi destinés à garantir, dans le cas où le navire est déconnecté du système d'alimentation 12 et est alimenté via son groupe diesel, que lorsqu'un courant de court-circuit de valeur supérieure à une intensité de référence apparait au niveau du premier réseau, l'appareil de protection placé immédiatement en amont du point d'origine du court-circuit, se déclenche pour éliminer le court-circuit.

Le convertisseur électrique 16 est, par exemple, un convertisseur électrique statique, c'est-à-dire un convertisseur formé à base de composants semi-conducteurs pour réaliser la conversion électrique. Le convertisseur électrique 16 est, par exemple un convertisseur de fréquence.

Le convertisseur électrique 16 est, par exemple, connecté entre, d'une part, une source d'énergie électrique, non représentée, fonctionnant à une fréquence de 50 Hz et délivrant une basse tension comprise par exemple entre 50 et 1000V et, d'autre part, le dispositif d'adaptation 18 fonctionnant à une fréquence de 60Hz. Le convertisseur électrique 16 est propre à transmettre le signal d'alimentation électrique S1 au dispositif d'adaptation 18.

Le dispositif d'adaptation 18 est relié au convertisseur 16 via une première liaison électrique 20 comprenant un premier conducteur de phase 22 et un premier conducteur de neutre 23. Le dispositif d'adaptation 18 est relié à la charge 14 via une deuxième liaison électrique 24 comprenant un deuxième conducteur de phase 26 et un deuxième conducteur de neutre 28.

Le dispositif d'adaptation 18 comprend un transformateur électrique 30 avec un rapport de transformation R de valeur variable, une unité de traitement 32 et un premier module de commutation 34. Le dispositif d'adaptation 18 comprend un capteur 36 de mesure de l'intensité d'un courant primaire I1 reçu en entrée 35 du dispositif d'adaptation 18 et un capteur 38 de mesure d'une tension primaire U1 appliquée à l'entrée 35 du dispositif d'adaptation 18.

Le transformateur électrique 30 comporte le premier module de commutation 34, une borne d'entrée 40 adaptée pour être reliée électriquement au convertisseur électrique 16 via le premier conducteur de phase 22 et une borne de sortie 42 adaptée pour être reliée électriquement à la charge 14 via le deuxième conducteur de phase 26.

Le transformateur électrique 30 comprend, en outre, un enroulement primaire 44 positionné du côté de la borne d'entrée 40 et un enroulement secondaire 46 positionné du côté de la borne de sortie 42.

L'unité de traitement 32 comprend un processeur 48 et une mémoire 50 associée au processeur 48.

Le premier module de commutation 34 comporte un premier bloc de commutation 52 et un deuxième bloc de commutation 54. Dans l'exemple de la figure 1, le module de commutation 34 est compris dans le transformateur 30.

Le capteur de mesure 36 est propre à mesurer le courant I1 reçu en la borne d'entrée 40.

Le capteur de mesure 38 est propre à mesurer la tension U1 appliquée à la borne d'entrée 40 du transformateur 30.

L'enroulement primaire 44 comprend une première partie formée d'un premier ensemble de spires 56 et une deuxième partie formée d'un deuxième ensemble de spires 58, le deuxième ensemble 58 étant distant du premier ensemble 56. Les premier 56 et deuxième 58 ensembles de spires comprennent des premier 59 et deuxième 60 points de connexion, respectivement des troisième 61 et quatrième 62 points de connexion et ont leur deuxième 60 et troisième 61 points de connexion en commun.

Le premier ensemble de spires 56 comprend par exemple deux fois plus de spires que le deuxième ensemble de spires 58. On note N1 le nombre de spires du premier ensemble de spires 56 et N2 le nombre de spires du deuxième ensemble de spires 58.

L'enroulement secondaire 46 est formé d'un unique ensemble de spires. On note M1 le nombre de spires de l'enroulement secondaire 46.

Le processeur 48 est propre à exécuter des logiciels stockés dans la mémoire 50.

La mémoire 50 comprend un premier logiciel 64 de comparaison de l'intensité mesurée I1 du courant primaire avec une première valeur de seuil A1 et un deuxième logiciel 66 de comparaison de la tension primaire mesurée U1 avec une deuxième valeur de seuil A2. La mémoire 50 comprend également un logiciel 68 de détection d'un court-circuit en la borne de sortie 42 et un logiciel 70 de pilotage de la valeur du rapport de transformation R.

Le premier bloc de commutation 52 est connecté entre la borne d'entrée 40 et le quatrième point de connexion 62. Le premier bloc de commutation 52 comprend par exemple un premier interrupteur 71, tel qu'un triac, piloté, via l'unité de traitement 32 et le logiciel de pilotage 70, entre un état passant dans lequel il relie électriquement la borne d'entrée 40 et le quatrième point de connexion 62 et un état bloqué dans lequel il isole électriquement la borne d'entrée 40 et le quatrième point de connexion 62.

Le deuxième bloc de commutation 54 est connecté entre, d'une part, la borne d'entrée 40 et, d'autre part, les deuxième 60 et troisième 61 points de connexion. Le deuxième bloc de commutation 54 comprend par exemple un deuxième interrupteur 72, tel qu'un triac, piloté, via l'unité de traitement 32 et le logiciel de pilotage 70, entre un état passant dans lequel il relie électriquement la borne d'entrée 40 et le deuxième point de connexion 60 et un état bloqué dans lequel il isole électriquement la borne d'entrée 40 et le deuxième point de connexion 60.

Le logiciel de détection 68 est configuré pour détecter le court-circuit lorsque, à la fois, la valeur de l'intensité du courant primaire I1 mesurée par le capteur de courant 36 est supérieure à la première valeur de seuil A1 et la valeur de la tension primaire mesurée par le capteur de tension 38 est inférieure à la deuxième valeur de seuil A2. Dans le cas contraire, le logiciel de détection 68 ne détecte pas de court-circuit. Avantageusement, le logiciel de détection 68 est apte à générer une donnée de référence D, qui prend une première valeur en cas d'absence de court-circuit détecté et une deuxième valeur en cas de détection du court-circuit, et apte à transmettre la donnée de référence D au logiciel de pilotage 70.

Le capteur 36 de mesure de l'intensité du courant primaire, le capteur 38 de mesure de la tension primaire, les premier 64 et deuxième 66 logiciels de comparaison et le logiciel de détection 68 forment un organe de détection du court-circuit en la borne de sortie 42, c'est-à-dire au niveau de la borne de sortie 42.

En variante, le logiciel de détection 68 est configuré pour détecter le court-circuit uniquement si la valeur de l'intensité mesurée I1 par le capteur de courant 36 est supérieure à la première valeur de seuil A1. Dans cette variante, le capteur 36 de mesure de l'intensité du courant primaire, le premier logiciel de comparaison 64 et le logiciel de détection 68 forment l'organe de détection du court-circuit en la borne de sortie 42, c'est-à-dire au niveau de la borne de sortie 42.

Le logiciel de pilotage 70 est propre à piloter la valeur du rapport de transformation R du transformateur 30 en fonction de la détection ou non du court-circuit par le logiciel de détection 68, par exemple en fonction de la valeur de la donnée de référence D. Plus précisément, le logiciel de pilotage 70 est configuré pour diminuer le rapport de transformation R lorsque le court-circuit est détecté et pour positionner le rapport de transformation R à une valeur prédéfinie en l'absence de détection du court-circuit.

A cet effet, le logiciel de pilotage 70 est propre à commander le premier module de commutation 34 entre un premier état et un deuxième état. Dans le premier état, seul le premier ensemble de spires 56 est connecté électriquement à la borne d'entrée 40 du transformateur 30 et est isolé électriquement du deuxième ensemble de spires 58. Dans le deuxième état, les premier 56 et deuxième 58 ensembles de spires sont connectés en série à la borne d'entrée 40 du transformateur 30.

Plus précisément, le logiciel de pilotage 70 est configuré pour commander le premier module de commutation 34 dans son deuxième état, en cas de détection du court-circuit, et dans son premier état en l'absence de détection d'un court-circuit. Pour cela, le logiciel de pilotage 70 est propre, en cas de détection du court-circuit, à commander le premier interrupteur 71 dans son état passant et le deuxième interrupteur 72 dans son état bloqué. Les premier 56 et deuxième 58 ensembles de spires sont alors connectés en série entre le premier conducteur de phase 22 et le premier conducteur de neutre 23. En outre, le logiciel de pilotage 70 est propre, en l'absence de détection d'un court-circuit, à commander le premier interrupteur 71 dans son état bloqué et le deuxième interrupteur 72 dans son état passant. Le premier ensemble de spires 56 est alors connecté entre le premier conducteur de phase 22 et le premier conducteur de neutre 23, tandis que le deuxième ensemble de spires 58 est isolé électriquement du premier ensemble de spires 56.

Ainsi, lorsque le premier module de commutation 34 est dans son deuxième état, le courant primaire I1 délivré par le convertisseur 16 traverse les premier 56 et deuxième 58 ensembles de spires, tandis que lorsque le premier module de commutation 34 est dans son premier état, le courant primaire I1 traverse uniquement le premier ensemble de spires 56. Le logiciel de pilotage 70 est alors propre à piloter le nombre de spires de l'enroulement primaire 44 qui sont connectées électriquement à la borne d'entrée 40 du transformateur 30, et alors propre à modifier la valeur du rapport de transformation R.

On note I2 un courant secondaire délivré à la borne de sortie 42. Lorsque le premier module de commutation 34 est dans son premier état, le rapport de transformation R est donné par la formule suivante :

$$R = \frac{M1}{N1} = \frac{I1}{I2} \qquad\qquad (1)$$

avec M1 le nombre de spires de l'enroulement secondaire 46 et N1 le nombre de spire du premier ensemble de spires 56.

Lorsque le premier module de commutation 34 est dans son deuxième état, le rapport de transformation R est donné par la formule suivante :

$$R = \frac{M1}{N1 + N2} = \frac{I1}{I2} \qquad\qquad (2)$$

avec N2 le nombre de spires du deuxième ensemble de spires 58

Ainsi, à partir des équations (1) et (2) donnant le rapport de transformation R, on observe que l'intensité du courant I2 délivré à la borne de sortie 42 augmente, lorsque le premier module de commutation 34 est piloté dans son deuxième état. Ceci permet, en cas de la détection du court-circuit, d'augmenter l'intensité du courant délivré à la charge 14. Les appareils électriques de protection de la charge sont alors propres à identifier l'apparition du court-circuit, et à localiser et/ou éliminer le court-circuit, avant que le convertisseur 16 s'arrête et n'alimente plus la charge 14 à cause du courant trop élevé requis par la charge 14 et de l'échauffement du convertisseur 16.

Ainsi, lors de l'apparition d'un court-circuit au niveau de la charge 14 et de la détection du court-circuit par le logiciel de détection 68, les appareils de protection de la charge 14 détectent rapidement le court-circuit, grâce à l'augmentation du courant secondaire I2 en la borne de sortie 42, et isolent la partie du premier réseau électrique où est apparu le défaut, sans que l'alimentation électrique de la charge 14 par le convertisseur 16 soit arrêtée. En effet, grâce à l'augmentation de l'intensité du courant secondaire 12, la durée nécessaire à la détection et à l'élimination du court-circuit par les appareils de protection de la charge 14 est inférieure à la durée mise par le convertisseur 16 pour s'arrêter de fonctionner et d'alimenter la charge 14 suite à l'apparition du court-circuit. Le nombre de spires du deuxième ensemble de spires 58 est choisi en fonction des caractéristiques de la charge 14, et notamment des valeurs de courant à partir desquelles les appareils de protection de la charge 14 se déclenchent.

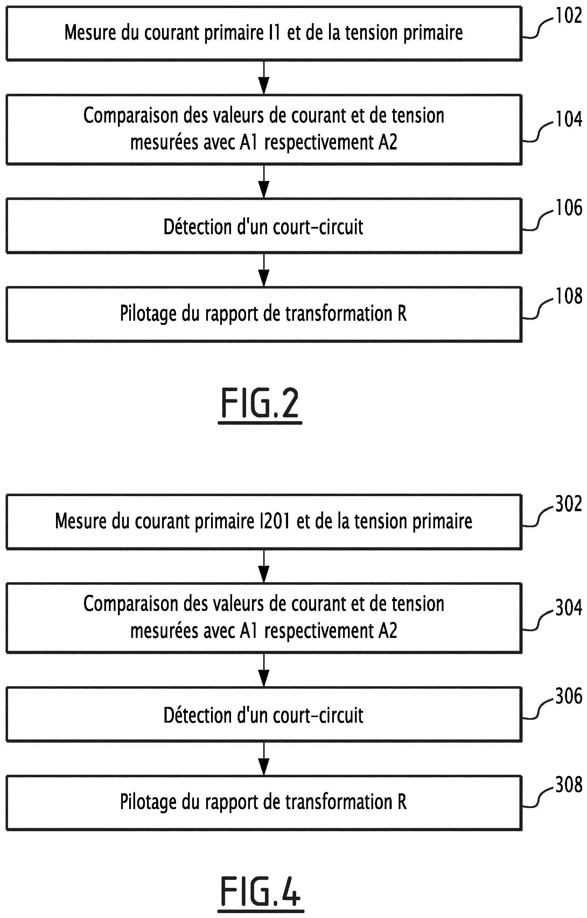

Le fonctionnement du dispositif d'adaptation 18 va désormais être présenté à l'aide de la figure 2.

Lors d'une étape initiale de mesure 102, le capteur de courant 36 et le capteur de tension 38 mesurent respectivement l'intensité du courant primaire I1 et la tension primaire. Les valeurs d'intensité et de tension mesurées sont alors transmises à l'unité de traitement 32 et aux premier 64 et deuxième 66 logiciels de comparaison.

Ensuite, au cours d'une étape de comparaison 104, le premier logiciel de comparaison 64 compare la valeur de l'intensité du courant primaire mesurée avec la première valeur de seuil A1, et le deuxième logiciel de comparaison 66 compare la tension primaire mesurée avec la deuxième valeur de seuil A2.

Puis, lors d'une étape de détection 106, le logiciel de détection 68 détecte si un court-circuit est apparu ou non en aval du transformateur 30. Le court-circuit est par exemple détecté si, lors de l'étape de comparaison 104, la valeur de l'intensité du courant primaire mesurée par le capteur de courant 36 est supérieure à la première valeur de seuil A1 et si la valeur de la tension primaire mesurée par le capteur de tension 40 est inférieure à la deuxième valeur de seuil A2. Dans le cas contraire, aucun court-circuit n'est détecté selon cet exemple.

En variante, lors de l'étape de mesure 102, seule l'intensité I1 du courant primaire est mesurée, tandis que lors de l'étape de comparaison 104 seule la valeur de l'intensité I1 du courant primaire mesurée est comparée avec la première valeur de seuil A1 et, lors de l'étape de détection 106, le court-circuit est par exemple détecté si, lors de l'étape de comparaison, la valeur de l'intensité I1 du courant primaire mesurée par le capteur de courant 36 est supérieure à la première valeur de seuil A1.

Suite à l'étape de détection 106, la donnée de référence D est générée par le logiciel de détection 68 et transmise au logiciel de pilotage 70.

Ensuite, au cours d'une étape 108 de pilotage de la valeur du rapport de transformation R, le nombre de spires de l'enroulement primaire 44 connectées électriquement à la borne d'entrée 40 du transformateur est piloté pour modifier la valeur du rapport de transformation R. Ainsi, si la donnée de référence D a la première valeur, alors le premier interrupteur 71 est commandé dans son état bloqué et le deuxième interrupteur 72 est commandé dans son état passant. Par contre, si la donnée de référence D a la deuxième valeur, alors le premier interrupteur 71 est commandé dans son état passant et le deuxième interrupteur 72 est commandé dans son état boquant.

Dans le premier mode de réalisation, le logiciel de pilotage 70 est propre à augmenter le nombre de spires de l'enroulement primaire 44, en cas de détection du court-circuit et à diminuer le nombre de spires de l'enroulement primaire 44, en cas de non détection du court-circuit. Ceci permet, lors de la détection du court-circuit, d'augmenter le courant secondaire 12, par rapport au cas où aucun court-circuit n'est détecté et ainsi d'augmenter le courant traversant la charge 14 pour que les appareils de protection qu'elle comprend se déclenchent rapidement et de manière sélective, sans risque d'arrêt ou de détérioration du convertisseur 16. En effet, le fait que la charge comprenne plusieurs appareils de protection électrique et que l'intensité du courant secondaire soit augmentée permet d'assurer la sélectivité des appareils de protection et ainsi de localiser, et/ou isoler, et/ou éliminer le court-circuit sans arrêter complètement l'alimentation de la charge 14.

Dans le premier mode de réalisation, le premier 56 et le deuxième 58 ensembles de spires forment soit deux ensembles de spires distincts, connectés l'un à l'autre via un conducteur afin de former l'enroulement primaire 44, soit deux ensembles de spires directement consécutifs et séparés par une prise médiane.

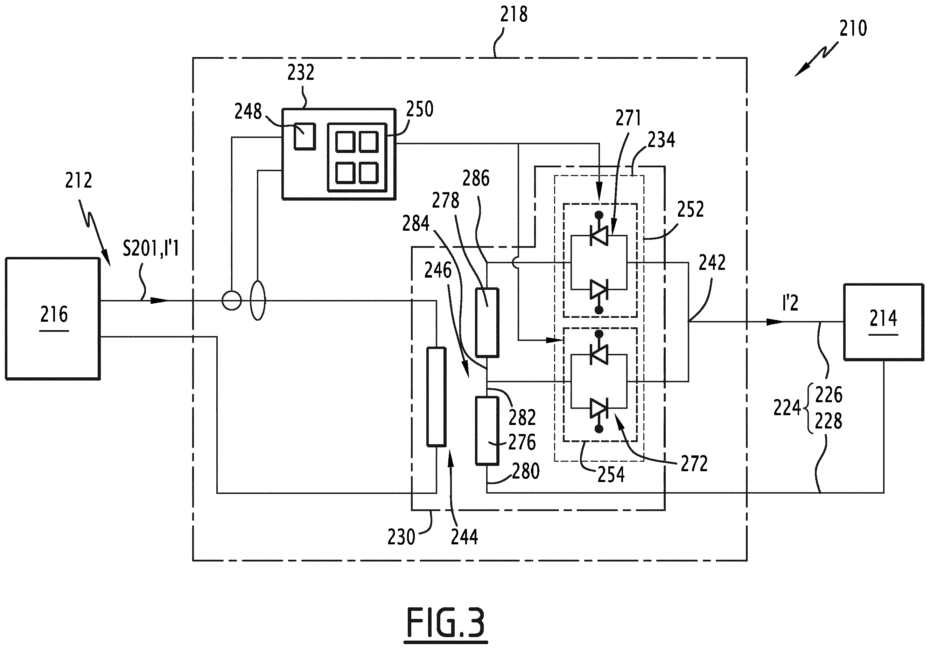

Dans un deuxième mode de réalisation présenté à la figure 3, les éléments similaires à ceux du premier mode de réalisation portent les mêmes références augmentées de 200.

Par la suite, seules les différences entre les premier et deuxième modes de réalisation seront présentées plus en détail et les éléments communs aux premier et deuxième modes de réalisation ne seront pas décrits à nouveau.

Sur la figure 3, une installation électrique 210 comprenant un système d'alimentation électrique 212, conforme au deuxième mode de réalisation de l'invention, et une charge électrique 214 est représentée.

Le système d'alimentation électrique 212 comporte un convertisseur électrique 216 et un dispositif 218 d'adaptation d'un signal d'alimentation électrique S201 apte à être reçu du convertisseur électrique 216 et délivré à la charge 214.

Le dispositif d'adaptation 218 selon le deuxième mode de réalisation, diffère du dispositif d'adaptation 18 selon le premier mode de réalisation, en ce que le dispositif d'adaptation 218 comprend un enroulement primaire 244 formé d'un unique ensemble de spires et un enroulement secondaire 246 comprenant des troisième 276 et quatrième 278 ensembles de spires. Les troisième 276 et quatrième 278 ensembles de spires comprennent des premier 280 et deuxième 282 points de connexion, respectivement des troisième 284 et quatrième 286 points de connexion, et ont leur deuxième 282 et troisième 284 points de connexion en commun.

Le dispositif d'adaptation 218 comprend un deuxième module de commutation 234 similaire au premier module de commutation 34 présenté dans le premier mode de réalisation, mais dont les connexions électriques dans le transformateur 230 diffèrent. Le dispositif d'adaptation 218 comprend également une unité de traitement 232 munie d'un processeur 248 et d'une mémoire 250.

Le deuxième module de commutation 234 comprend un premier bloc de commutation 252 et un deuxième bloc de commutation 254.

Le premier bloc de commutation 252 est connecté entre la borne de sortie 242 et le quatrième point de connexion 286. Le premier bloc de commutation 252 comprend, par exemple, un premier interrupteur 271, tel qu'un triac, piloté, via l'unité de traitement 232 et le logiciel de pilotage 270, entre un état passant dans lequel il relie électriquement la borne de sortie 242 et le quatrième point de connexion 286 et un état bloqué dans lequel il isole électriquement la borne de sortie 242 et le quatrième point de connexion 286.

Le deuxième bloc de commutation 254 est connecté entre, d'une part, la borne de sortie 242 et, d'autre part, les deuxième 282 et troisième 284 points de connexion. Le deuxième bloc de commutation 254 comprend, par exemple, un deuxième interrupteur 272, tel qu'un triac, piloté, via l'unité de traitement 32 et le logiciel de pilotage 270, entre un état passant dans lequel il relie électriquement la borne de sortie 242 et le troisième point de connexion 284 et un état bloqué dans lequel il isole électriquement la borne de sortie 242 et le troisième point de connexion 284.

Dans ce deuxième mode de réalisation, le logiciel de pilotage 270 est configuré pour diminuer la valeur du rapport de transformation R lorsque le court-circuit est détecté, et pour positionner le rapport de transformation R à une valeur prédéfinie en l'absence de détection du court-circuit.

A cet effet, le logiciel de pilotage 270 est propre à commander le deuxième module de commutation 234 entre un troisième état et un quatrième état. Dans le troisième état, les troisième 276 et quatrième 278 ensembles de spires sont connectés en série à la borne de sortie 242 du transformateur 230. Dans le quatrième état, seul le troisième ensemble de spires 276 est connecté électriquement à la borne de sortie 242 du transformateur 230, et le troisième ensemble 276 est isolé électriquement du quatrième ensemble de spires 278.

Plus précisément, le logiciel de pilotage 270 est configuré pour commander le deuxième module de commutation 234 dans son quatrième état en cas de détection du court-circuit, et dans son troisième état, en l'absence de détection d'un court-circuit. Pour cela, le logiciel de pilotage 270 est propre, en cas de détection du court-circuit, à commander le premier interrupteur 271 dans son état bloqué et le deuxième interrupteur 272 dans son état passant. Le troisième ensemble de spires 276 est alors connecté entre le deuxième conducteur de phase 226 et le deuxième conducteur de neutre 228, tandis que le quatrième ensemble de spires 278 est isolé électriquement du troisième ensemble de spires 276. En outre, le logiciel de pilotage 270 est propre, en l'absence de détection d'un court-circuit, à commander le premier interrupteur 271 dans son état passant et le deuxième interrupteur 272 dans son état bloqué. Les troisième 276 et quatrième 278 ensembles de spires sont alors connectés en série entre le deuxième conducteur de phase 226 et le deuxième conducteur de neutre 228.

Ainsi, lorsque le deuxième module de commutation 234 est dans son troisième état, le courant secondaire I'2 traverse les troisième 276 et quatrième 278 ensembles de spires, tandis que, lorsque le deuxième module de commutation 234 est dans son quatrième état, le courant secondaire I'2 traverse uniquement le troisième ensemble de spires 276.

Le logiciel de pilotage 270 est alors propre à piloter le nombre de spires de l'enroulement secondaire 246 connectées électriquement à la borne de sortie 242 du transformateur 230, donc apte à modifier la valeur du rapport de transformation R.

En notant I'1 le courant primaire délivré à la borne d'entrée 240, N'1 le nombre de spires de l'enroulement primaire 244, M3 le nombre de spires du troisième ensemble de spires 276 et M4 le nombre de spires du quatrième ensemble de spires 278, on obtient, lorsque le deuxième module de commutation 234 est dans son troisième état, le rapport de transformation R avec la formule suivante :

$$R = \frac{M3 + M4}{N'1} = \frac{I'1}{I'2} \tag{3}$$

Lorsque le deuxième module de commutation 234 est dans son quatrième état, le rapport de transformation R est donné par la formule suivante :

$$R = \frac{M3}{N'1} = \frac{I'1}{I'2} \tag{4}$$

Le fonctionnement du dispositif d'adaptation 218 va désormais être présenté à l'aide de la figure 4 de procédé d'adaptation du signal d'alimentation S201.

Le procédé d'adaptation comprend des étapes de mesure 302, de comparaison 304 et de détection 306 similaires aux étapes de mesure 102, comparaison 104 et détection 106 présentées dans le premier mode de réalisation.

Ensuite, au cours d'une étape 308 de pilotage de la valeur du rapport de transformation R, le nombre de spires de l'enroulement secondaire 246 connectées électriquement à la borne de sortie 242 du transformateur 230 est piloté pour modifier la valeur du rapport de transformation R. Ainsi, si la donnée de référence D a la première valeur, alors le premier interrupteur 271 est commandé dans son état passant et le deuxième interrupteur 272 est piloté dans son état bloqué. Par contre, si la donnée de référence a la deuxième valeur, alors le premier interrupteur 271 est commandé dans son état bloqué et le deuxième interrupteur 272 est piloté dans son état passant.

Dans le deuxième mode de réalisation, le logiciel de pilotage 270 est propre à augmenter le nombre de spires de l'enroulement secondaire 246, en cas de non détection du court-circuit et à diminuer le nombre de spires de l'enroulement secondaire 246, en cas de détection du court-circuit. Ceci permet, lors de la détection du court-circuit, d'augmenter le courant secondaire 12, par rapport au cas où aucun court-circuit n'est détecté. Le courant traversant la charge 214 est ainsi augmenté, et les appareils de protection compris dans cette charge se déclenchent rapidement et de manière sélective, sans risque d'arrêt du convertisseur 216.

Dans le deuxième mode de réalisation, le troisième 276 et le quatrième 278 ensembles de spires forment soit deux ensembles de spires distincts, connectés l'un à l'autre via un conducteur afin de former l'enroulement primaire 44, soit deux ensembles de spires directement consécutifs et séparés par une prise médiane.

Selon une autre variante, le courant circulant dans les première 20 et deuxième 24 liaisons électriques est un courant triphasé, et les première 20 et deuxième 24 liaisons électriques comportent trois conducteurs électriques de phase.

Selon une autre variante, le courant circulant dans les première 20 et deuxième 24 liaisons électriques est un courant triphasé, et les première 20 et deuxième 24 liaisons électriques comportent trois conducteurs électriques de phase et un conducteur électrique de neutre.

On conçoit ainsi que le dispositif d'adaptation tel que décrit dans les différents modes de réalisation de l'invention permet d'améliorer l'alimentation de la charge 14, 214 et notamment, d'assurer la continuité de l'alimentation de la charge 14, 214 et de garantir la sélectivité d'appareils de protection électrique associés à la charge 14, 214.

L'homme du métier comprend que le deuxième ensemble de spires 58 est distant du premier ensemble de spires 56, au sens où les premier 56 et deuxième 58 ensembles de spires sont séparés l'un de l'autre, ou encore distincts l'un de l'autre.

Par exemple, ils sont soit reliés l'un à l'autre via un conducteur, soit séparés par une prise médiane.

Il en est de même pour les troisième 276 et quatrième 278 ensembles de spires.

**Revendications**

**1.** Dispositif (18 ; 218) d'adaptation d'un signal d'alimentation électrique (S1, S201), le signal étant apte à être reçu d'un convertisseur électrique (16 ; 216) et délivré à une charge (14 ; 214), le dispositif d'adaptation (18 ; 218) comprenant :

- un transformateur électrique (30 ; 230) comportant une borne d'entrée (40 ; 240) adaptée pour être reliée électriquement au convertisseur électrique (16; 216) via un premier conducteur de phase (22) et une borne de sortie (42 ; 242) adaptée pour être reliée électriquement à la charge (14 ; 214) via un deuxième conducteur de phase (26),
- un organe de détection d'un court-circuit en la borne de sortie (42 ; 242), **caractérisé en ce que** le transformateur électrique (30 ; 230) a un rapport de transformation (R) de valeur variable, et **en ce que** le dispositif d'adaptation (18 ; 218) comprend en outre des moyens (70 ; 270) de pilotage du rapport de transformation (R) du transformateur (30 ; 230) en fonction de la détection du court-circuit.

2. Dispositif selon la revendication 1, dans lequel l'organe de détection comprend des moyens (36 ; 236) de mesure de l'intensité d'un courant primaire (I1 ; I201) reçu en la borne d'entrée (40 ; 240) et des moyens (64 ; 264) de comparaison de l'intensité mesurée du courant primaire (I1 ; I201) avec une première valeur de seuil (A1), l'organe de détection étant configuré pour détecter le court-circuit lorsque la valeur de l'intensité mesurée (I1 ; I201) est supérieure à la première valeur de seuil (A1).

3. Dispositif selon la revendication 2, dans lequel l'organe de détection comprend des moyens (38 ; 238) de mesure d'une tension primaire appliquée à la borne d'entrée (40 ; 240) du transformateur (30 ; 230) et des moyens (66 ; 266) de comparaison de la tension primaire mesurée avec une deuxième valeur de seuil (A2), l'organe de détection étant configuré pour détecter le court-circuit lorsque la valeur de l'intensité mesuré du courant primaire (I1 ; I201) est supérieure à la première valeur de seuil (A1) et la valeur de la tension primaire mesuré est inférieure à la deuxième valeur de seuil (A2).

4. Dispositif selon l'une des revendications précédentes, dans lequel les moyens de pilotage (70 ; 270) sont configurés pour diminuer la valeur du rapport de transformation (R) en cas de détection du court-circuit.

5. Dispositif selon l'une des revendications précédentes, dans lequel les moyens de pilotage (70 ; 270) sont configurés pour positionner le rapport de transformation R à une valeur prédéfinie en l'absence de détection du court-circuit.

6. Dispositif selon l'une des revendications précédentes, dans lequel le transformateur (30) comprend un enroulement primaire (44) comprenant une première partie formée d'un premier ensemble de spires (56) et une deuxième partie formée d'un deuxième ensemble de spires (58), le deuxième ensemble (58) étant distinct du premier ensemble (56), et

dans lequel, le dispositif comprend un premier module commandable (34) de commutation entre un premier état dans lequel seul le premier ensemble de spires (56) est connecté électriquement à la borne d'entrée (40) du transformateur (30) et le premier ensemble de spires (56) est isolé électriquement du deuxième ensemble de spires (58) et un deuxième état dans lequel le premier ensemble de spires (56) et le deuxième ensemble de spires (58) sont connectés en série à la borne d'entrée (40) du transformateur (30).

7. Dispositif selon la revendication 6, dans lequel les moyens de pilotage (70) sont configurés pour commander le premier module de commutation (34) dans son deuxième état en cas de détection du court-circuit.

8. Dispositif selon la revendication 6 ou 7, dans lequel les moyens de pilotage (70) sont configurés pour commander le premier module de commutation (34) dans son premier état en l'absence de détection du court-circuit.

9. Dispositif selon l'une des revendications précédentes, dans lequel le transformateur (230) comprend un enroulement secondaire (246) comprenant une troisième partie formée d'un troisième ensemble de spires (276) et une quatrième partie formée d'un quatrième ensemble de spires (278), le quatrième ensemble (278) étant distinct du troisième ensemble (276), et

dans lequel, le dispositif comprend un deuxième module commandable (234) de commutation entre un troisième état dans lequel le troisième ensemble de spires (276) et le quatrième ensemble de spires (278) sont connectés en série à la borne de sortie (242) du transformateur et un quatrième état dans lequel seul le troisième ensemble de spires (276) est connecté électriquement à la borne de sortie (242) du transformateur (230) et le troisième ensemble de spires (276) est isolé électriquement du quatrième ensemble de spires (278).

10. Dispositif selon la revendication 9, dans lequel les moyens de pilotage (270) sont configurés pour commander le deuxième module de commutation (234) dans son quatrième état en cas de la détection du court-circuit.

**11.** Dispositif selon la revendication 9 ou 10, dans lequel les moyens de pilotage (270) sont configurés pour commander le deuxième module de commutation (234) dans son troisième état en l'absence de détection du court-circuit.

**12.** Système (12 ; 212) d'alimentation électrique d'une charge (14 ; 214) comprenant au moins un convertisseur électrique (16 ; 216) et un dispositif (18 ; 218) d'adaptation d'un signal d'alimentation électrique (S1 ; S201) reçu de chaque convertisseur électrique (16 ; 216), le dispositif étant apte à délivrer un signal adapté à la charge (14 ; 214), **caractérisé en ce que** le dispositif d'adaptation (18 ; 218) est selon l'une des revendications précédentes.

**13.** Procédé d'adaptation d'un signal d'alimentation électrique (S1 ; S201), le signal étant apte à être reçu d'un convertisseur électrique (16 ; 216) et délivré à une charge (14 ; 214), le procédé étant mis en oeuvre au moyen d'un dispositif d'adaptation (18 ; 218) comprenant un transformateur électrique (30 ; 230) comportant une borne de sortie (42 ; 242) adaptée pour être reliée électriquement à la charge (14 ; 214) et une borne d'entrée (40 ; 240) adaptée pour être reliée électriquement au convertisseur électrique (16 ; 216), le procédé comprenant l'étape suivante :

- a) la détection (106 ; 306) d'un court-circuit en la borne de sortie (42 ; 242),
**caractérisé en ce que** le transformateur électrique (30 ; 230) a un rapport de transformation (R) de valeur variable, et

**en ce que** le procédé comprend l'étape suivante :

- b) le pilotage (70 ; 270) du rapport de transformation (R) du transformateur (30 ; 230) en fonction de la détection du court-circuit.

**14.** Procédé selon la revendication 13, dans lequel le transformateur (30) comprend un enroulement primaire (44) comportant des spires, et dans lequel, lors de l'étape de pilotage b), le nombre de spires de l'enroulement primaire (44) connectées électriquement à la borne d'entrée (40) du transformateur (30) est piloté pour modifier la valeur du rapport de transformation (R).

**15.** Procédé selon la revendication 13 ou 14, dans lequel le transformateur (230) comprend un enroulement secondaire (246) comportant des spires, et dans lequel, lors de l'étape de pilotage b), le nombre de spires de l'enroulement secondaire (246) connectées électriquement à la borne de sortie (242) du transformateur (230) est piloté pour modifier la valeur du rapport de transformation (R).

**Patentansprüche**

**1.** Vorrichtung (18; 218) zur Anpassung eines Stromversorgungssignals (S1, S201), wobei das Signal von einem elektrischen Umformer (16; 216) empfangen und an eine Last (14; 214) geschickt werden kann, wobei die Anpassungsvorrichtung (18; 218) umfasst:

- einen elektrischen Transformator (30; 230), der einen Eingangsanschluss (40; 240), der dazu angepasst ist, über einen ersten Phasenleiter (22) elektrisch an den elektrischen Umformer (16; 216) angeschlossen zu werden, und einen Ausgangsanschluss (42; 242) umfasst, der dazu angepasst ist, über einen zweiten Phasenleiter (26) elektrisch an die Last (14; 214) angeschlossen zu werden,
- ein Element zum Erfassen eines Kurzschlusses im Ausgangsanschluss (42; 242),

**dadurch gekennzeichnet, dass** der elektrische Transformator (30; 230) ein Transformationsverhältnis (R) mit variablem Wert hat, und dass die Anpassungsvorrichtung (18; 218) darüber hinaus Einrichtungen (70; 270) zum Steuern des Transformationsverhältnisses (R) des Transformators (30; 230) in Abhängigkeit von der Erfassung des Kurzschlusses umfasst.

**2.** Vorrichtung nach Anspruch 1, wobei das Erfassungselement Einrichtungen (36; 236) zum Messen der Stärke eines am Eingangsanschluss (40; 240) empfangenen Primärstroms (I1; 1201) und Einrichtungen (64; 264) zum Vergleichen der gemessenen Stärke des Primärstroms (I1; 1201) mit einem ersten Schwellenwert (A1) umfasst, wobei das Erfassungselement dazu ausgelegt ist, den Kurzschluss zu erfassen, wenn der Wert der gemessenen Stärke (I1; 1201) höher ist als der erste Schwellenwert (A1).

**3.** Vorrichtung nach Anspruch 2, wobei das Erfassungselement Einrichtungen (38; 238) zum Messen einer am Eingangsanschluss (40; 240) des Transformators (30; 230) anliegenden Primärspannung und Einrichtungen (66; 266) zum Vergleichen der gemessenen Primärspannung mit einem zweiten Schwellenwert (A2) umfasst, wobei das Erfassungselement dazu ausgelegt ist, den Kurzschluss zu erfassen, wenn der Wert der gemessenen Stärke des Primärstroms (I1; 1201) höher ist als der erste Schwellenwert (A1) und der Wert der gemessenen Primärspannung niedriger ist als der zweite Schwellenwert (A2).

4. Vorrichtung nach einem der vorhergehenden Ansprüche, wobei die Steuereinrichtungen (70; 270) dazu ausgelegt sind, den Wert des Transformationsverhältnisses (R) im Falle einer Erfassung des Kurzschlusses zu verringern.

5. Vorrichtung nach einem der vorhergehenden Ansprüche, wobei die Steuereinrichtungen (70; 270) dazu ausgelegt sind, das Transformationsverhältnis R bei Nichterfassung des Kurzschlusses auf einen vorbestimmten Wert zu setzen.

6. Vorrichtung nach einem der vorhergehenden Ansprüche, wobei der Transformator (30) eine Primärwicklung (44) mit einem ersten Teil, der aus einer ersten Gruppe von Windungen (56) gebildet ist, und einem zweiten Teil umfasst, der aus einer zweiten Gruppe von Windungen (58) gebildet ist, wobei sich die zweite Gruppe (58) von der ersten Gruppe (56) unterscheidet, und
wobei die Vorrichtung ein erstes steuerbares Modul (34) umfasst zur Umschaltung zwischen einem ersten Zustand, in dem nur die erste Gruppe von Windungen (56) elektrisch an den Eingangsanschluss (40) des Transformators (30) angeschlossen ist und die erste Gruppe von Windungen (56) elektrisch von der zweiten Gruppe von Windungen (58) isoliert ist, und einem zweiten Zustand, in dem die erste Gruppe von Windungen (56) und die zweite Gruppe von Windungen (58) in Reihe an den Eingangsanschluss (40) des Transformators (30) angeschlossen sind.

7. Vorrichtung nach Anspruch 6, wobei die Steuereinrichtungen (70) dazu ausgelegt sind, das erste Umschaltmodul (34) im Erfassungsfall des Kurzschlusses in seinen zweiten Zustand zu versetzen.

8. Vorrichtung nach Anspruch 6 oder 7, wobei die Steuereinrichtungen (70) dazu ausgelegt sind, das erste Umschaltmodul (34) bei Nichterfassung des Kurzschlusses in seinen ersten Zustand zu versetzen.

9. Vorrichtung nach einem der vorhergehenden Ansprüche, wobei der Transformator (230) eine Sekundärwicklung (246) mit einem dritten Teil, der aus einer dritten Gruppe von Windungen (276) gebildet ist, und einem vierten Teil umfasst, der aus einer vierten Gruppe von Windungen (278) gebildet ist, wobei sich die vierte Gruppe (278) von der dritten Gruppe (276) unterscheidet, und
wobei die Vorrichtung ein zweites steuerbares Modul (234) umfasst zur Umschaltung zwischen einem dritten Zustand, in dem die dritte gruppe von Windungen (276) und die vierte Gruppe von Windungen (278) in Reihe an den Ausgangsanschluss (242) des Transformators angeschlossen sind, und einem vierten Zustand, in dem nur die dritte Gruppe von Windungen (276) elektrisch an den Ausgangsanschluss des Transformators (230) angeschlossen ist und die dritte Gruppe von Windungen (276) elektrisch von der vierten Gruppe von Windungen (287) isoliert ist.

10. Vorrichtung nach Anspruch 9, wobei die Steuereinrichtungen (270) dazu ausgelegt sind, das zweite Umschaltmodul (234) im Erfassungsfall des Kurzschlusses in seinen vierten Zustand zu versetzen.

11. Vorrichtung nach Anspruch 9 oder 10, wobei die Steuereinrichtungen (270) dazu ausgelegt sind, das zweite Umschaltmodul (234) bei Nichterfassung des Kurzschlusses in seinen dritten Zustand zu versetzen.

12. System (12; 212) zur Stromversorgung einer Last (14; 214), mindestens einen elektrischen Umformer (16; 216) und eine Vorrichtung (18; 218) zur Anpassung eines von jedem elektrischen Umformer (16; 216) empfangenen Stromversorgungssignals (S1; S201) umfassend, wobei die Vorrichtung ein an die Last (14; 214) angepasstes Signal verschicken kann,
**dadurch gekennzeichnet, dass** die Anpassungsvorrichtung (18; 218) nach einem der vorhergehenden Ansprüche ist.

13. Verfahren zur Anpassung eines Stromversorgungssignals (S1; S201), wobei das Signal von einem elektrischen Umformer (16; 216) empfangen und an eine Last (14; 214) geschickt werden kann, wobei das Verfahren mittels einer Anpassungsvorrichtung (18; 218) umgesetzt wird, die einen elektrischen Transformator (30; 230) mit einem Ausgangsanschluss (42; 242), der dazu angepasst ist, elektrisch an die Last (14; 214) angeschlossen zu werden, und einem Eingangsanschluss (40; 240) umfasst, der dazu angepasst ist, elektrisch an den elektrischen Umformer (16; 216) angeschlossen zu werden, wobei das Verfahren den folgenden Schritt umfasst:

- a) Erfassung (106; 306) eines Kurzschlusses im Ausgangsanschluss (42; 242),

**dadurch gekennzeichnet, dass** der elektrische Transformator (30; 230) ein Transformationsverhältnis (R) mit variablem Wert hat, und

dass das Verfahren den folgenden Schritt umfasst:

- b) Steuern (70; 270) des Transformationsverhältnisses (R) des Transformators (30; 230) in Abhängigkeit von der Erfassung des Kurzschlusses.

14. Verfahren nach Anspruch 13, wobei der Transformator (30) eine Primärwicklung (44) mit Windungen umfasst, und wobei beim Steuerschritt b) die Anzahl der elektrisch an Eingangsanschluss (40) des Transformators (30) angeschlossenen Windungen der Primärwicklung (44) gesteuert wird, um den Wert des Transformationsverhältnisses (R) zu modifizieren.

15. Verfahren nach Anspruch 13 oder 14, wobei der Transformator (230) eine Sekundärwicklung (246) mit Windungen umfasst, und wobei beim Steuerschritt b) die Anzahl der elektrisch an Ausgangsanschluss (242) des Transformators (230) angeschlossenen Windungen der Sekundärwicklung (246) gesteuert wird, um den Wert des Transformationsverhältnisses (R) zu modifizieren.

**Claims**

1. A device (18; 218) for adapting an electric power supply signal (S1, S201), the signal being able to be received from an electric converter (16; 216) and delivered to a load (14; 214), the adaptation device (18; 218) comprising:

   - an electric transformer (30; 230) comprising an input terminal (40; 240) adapted to be electrically connected to the electric converter (16; 216) via a first phase conductor (22) and an output terminal (42; 242) adapted to be electrically connected to the load (14; 214) via a second phase conductor (26);
   - a unit for detecting a short-circuit on the output terminal (42; 242),

   **characterised in that** the electric transformer (30; 230) has a variable-value transformation ratio (R) and **in that** the adaptation device (18; 218) further comprises means (70; 270) for controlling the transformation ratio (R) of the transformer (30; 230) as a function of the detection of the short-circuit.

2. The device according to claim 1, wherein the detection unit comprises means (36; 236) for measuring the intensity of a primary current (I1; 1201) received at the input terminal (40; 240) and means (64; 264) for comparing the measured intensity of the primary current (I1; 1201) to a first threshold value (A1), the detection unit being configured to detect the short-circuit when the value of the measured intensity (I1; 1201) is higher than the first threshold value (A1).

3. The device according to claim 2, wherein the detection unit comprises means (38; 238) for measuring a primary voltage applied to the input terminal (40; 240) of the transformer (30; 230) and means (66; 266) for comparing the measured primary voltage to a second threshold value (A2), the detection unit being configured to detect the short-circuit when the value of the measured intensity of the primary current (I1; 1201) is higher than the first threshold value (A1) and the value of the measured primary voltage is lower than the second threshold value (A2).

4. The device according to any one of the preceding claims, wherein the control means (70; 270) are configured to reduce the value of the transformation ratio (R) when the short-circuit is detected.

5. The device according to any one of the preceding claims, wherein the control means (70; 270) are configured to place the transformation ratio (R) at a predefined value when the short-circuit is not detected.

6. The device according to any one of the preceding claims, wherein the transformer (30) comprises a primary winding (44) comprising a first part made up of a first set of turns (56) and a second part made up of a second set of turns (58), the second set (58) being distinct from the first set (56), and
wherein the device comprises a first controllable module (34) for switching between a first state, in which only the first set of turns (56) is electrically connected to the input terminal (40) of the transformer (30) and the first set of turns (56) is electrically isolated from the second set of turns (58), and a second state, in which the first set of turns (56) and the second set of turns (58) are connected in series to the input terminal (40) of the transformer (30).

7. The device according to claim 6, wherein the control means (70) are configured to control the first switching module (34) in its second state when the short-circuit is detected.

8. The device according to claim 6 or 7, wherein the control means (70) are configured to control the first switching module (34) in its first state when the short-circuit is not detected.

9. The device according to any one of the preceding claims, wherein the transformer (230) comprises a secondary winding (246) comprising a third part made up of a third set of turns (276) and a fourth part made up of a fourth set of turns (278), the fourth set (278) being distinct from the third set (276), and
wherein the device comprises a second controllable module (234) for switching between a third state, in which the third set of turns (276) and the fourth set of turns (278) are connected in series to the output terminal (242) of the transformer, and a fourth state, in which only the third set of turns (276) is electrically connected to the output terminal (242) of the transformer (230) and the third set of turns (276) is electrically isolated from the fourth set of turns (278).

10. The device according to claim 9, wherein the control means (270) are configured to control the second switching module (234) in its fourth state when the short-circuit is detected.

11. The device according to claim 9 or 10, wherein the control means (270) are configured to control the second switching module (234) in its third state when the short-circuit is not detected.

12. An electric power supply system (12; 212) for a load (14; 214), comprising at least one electric converter (16; 216) and a device (18; 218) for adapting an electric power supply signal (S1; S201) received from each electric converter (16; 216), the device being able to deliver a signal adapted to the load (14; 214),
**characterised in that** the adaptation device (18; 218) is a device according to any one of the preceding claims.

13. A method for adapting an electric power supply signal (S1; S201), the signal being able to be received from an electric converter (16; 216) and delivered to a load (14; 214), the method being implemented by means of an adaptation device (18; 218) comprising an electric transformer (30; 230) comprising an output terminal (42; 242) adapted to be electrically connected to the load (14; 214) and an input terminal (40; 240) adapted to be electrically connected to the electric converter (16; 216), the method comprising the following step:

- a) detecting (106; 306) a short-circuit on the output terminal (42; 242),
**characterised in that** the electric transformer (30; 230) has a variable-value transformation ratio (R), and

**in that** the method comprises the following step:

- b) controlling (70; 270) the transformation ratio (R) of the transformer (30; 230) as a function of the detection of the short-circuit.

14. The method according to claim 13, wherein the transformer (30) comprises a primary winding (44) comprising turns and wherein, during the control step b), the number of turns of the primary winding (44) electrically connected to the input terminal (40) of the transformer (30) is controlled in order to change the value of the transformation ratio (R).

15. The method according to claim 13 or 14, wherein the transformer (230) comprises a secondary winding (246) comprising turns and wherein, during the control step b), the number of turns of the secondary winding (246) electrically connected to the output terminal (242) of the transformer (230) is controlled in order to change the value of the transformation ratio (R).

FIG.1

| Mesure du courant primaire I1 et de la tension primaire | 102 |
|---|---|
| ↓ | |
| Comparaison des valeurs de courant et de tension mesurées avec A1 respectivement A2 | 104 |
| ↓ | |
| Détection d'un court-circuit | 106 |
| ↓ | |
| Pilotage du rapport de transformation R | 108 |

## FIG.2

| Mesure du courant primaire I201 et de la tension primaire | 302 |
|---|---|
| ↓ | |
| Comparaison des valeurs de courant et de tension mesurées avec A1 respectivement A2 | 304 |
| ↓ | |
| Détection d'un court-circuit | 306 |
| ↓ | |
| Pilotage du rapport de transformation R | 308 |

## FIG.4

FIG.3

EP 2 980 941 B1

**EP 2 980 941 B1**

**RÉFÉRENCES CITÉES DANS LA DESCRIPTION**

**Documents brevets cités dans la description**

- WO 2010066888 A2